# EUROPÄISCHE PATENTANMELDUNG

(11) **EP 1 316 396 A2**
(43) Veröffentlichungstag der Anmeldung: **04.06.2003**
(21) Anmeldenummer: 02025838.0
(22) Anmeldetag: 19.11.2002
(51) Int. Cl.: B27C 5/00, B23Q 1/70, F16H 19/00, B27M 1/08

(54) **Omega- Antriebsvorrichtung**

(30) Priorität: 01.12.2001 DE 20119568 U
(71) Anmelder: Weinmann Holzbausystemtechnik GmbH, 72813 St. Johann (DE)
(72) Erfinder: Weinmann, Karl, 72813 St. Johann (DE)
(74) Vertreter: Möbus, Daniela, Dr.-Ing.

(57) **Zusammenfassung**

Eine Omega-Antriebsvorrichtung für auf Laufrollen linear bewegbare Einrichtungen, insbesondere für ein Werkzeugportal einer Werkzeugmaschine, mit Zahnriemen oder Ketten, wobei die Zahnriemen oder Ketten von einer an der Einrichtung angeordneten Welle angetrieben und zwischen seitlichen Laufscheiben an den Laufrollen und unter diesen hindurchgeführt sind. Die Laufrollen sind auf Schienen geführt, die mit Führungszahnriemen belegt sind, deren Verzahnung in die Verzahnung der Antriebszahnriemen oder -ketten der Einrichtung eingreifen.

## Beschreibung

Die Erfindung betrifft eine Omega-Antriebsvorrichtung für auf Laufrollen linear bewegbare Einrichtungen, insbesondere für ein längs eines Tisches zur Werkstückaufnahme verfahrbares Werkzeugportal einer Werkzeugmaschine mit Zahnriemen oder Ketten, wobei die Zahnriemen von einer an der Einrichtung angeordneten Welle angetrieben und zwischen seitlichen Laufscheiben an den Laufrollen und unter diesen hindurchgeführt sind.

Eine solche Antriebsvorrichtung für ein Portal einer Werkzeugmaschine zur Holzbearbeitung ist aus der DE 198 18 640 C2 bekannt. Die Stützen des Portals laufen auf Laufrollen und führen Zahnriemen oder Ketten, die in den Stützen nach oben und dort jeweils über ein Antriebsrad geführt sind. Die Laufrollen des Portals weisen eine Achse und an den Achsenden angeordnete Laufscheiben auf, sodass die Zahnriemen oder Ketten unter der Achse hindurchgeführt werden können und sich insgesamt ein omega-förmiger Verlauf der Zahnriemen oder Ketten ergibt. Neben den Laufscheiben sind Führungsscheiben angeordnet, die die Laufrollen entlang von Führungsschienen führen. In der Praxis hat sich nun gezeigt, dass bei sehr langen Verfahrwegen des Portals, wie sie insbesondere bei der Bearbeitung von Holzbalken vorkommen, die Führung des Portals und damit der Werkzeuge aufgrund von Längungen der Zahnriemen oder Ketten nicht mehr exakt einzuhalten ist.

Der vorliegenden Erfindung liegt daher die Aufgabe zugrunde, die bekannte Antriebsvorrichtung derart zu verbessern, dass unabhängig vom Verfahrweg des Portals oder einer anderen auf Laufrollen bewegbaren Einrichtung dauerhaft eine exakte Führung der Einrichtung möglich ist.

Diese Aufgabe wird mit einer eingangs beschriebenen Antriebsvorrichtung erfindungsgemäß dadurch gelöst, dass die Laufrollen der Einrichtung auf Schienen geführt sind, die mit Führungszahnriemen belegt sind, deren Verzahnung in die Verzahnung der Antriebszahnriemen oder -ketten der Einrichtung eingreifen. Die Führungszahnriemen auf den Schienen verhindern zuverlässig eine Längung der Antriebszahnriemen oder -ketten, da letztere nun durch die Verzahnung der Führungszahnriemen stabilisiert werden. Selbst sehr lange Verfahrwege der Einrichtung haben nun keinen Einfluss mehr auf die Genauigkeit der Positionierung der Einrichtung. Dies ist insbesondere für Portale von Werkzeugmaschinen mit am Portal angeordneten Werkzeugen von Bedeutung, da es hier für eine ordnungsgemäße Bearbeitung der Werkstücke auf eine exakte Positionierung der Werkzeuge in allen Bewegungsachsen ankommt. Dieser Stabilisierungseffekt durch die Führungszahnriemen bleibt auch langfristig erhalten.

Ein weiterer Vorteil des Vorsehens der Führungszahnriemen ist die Vermeidung der Ansammlung von Schmutz zwischen den Führungs- und den Antriebszahnriemen oder -ketten. Bei dem Portal der bekannten Holzverarbeitungsmaschine konnte sich Schmutz zwischen der glatten Schienenoberfläche und den Antriebszahnriemen festsetzen. Dies entfällt jetzt, da die Antriebs- und die Führungszahnriemen stets miteinander im Eingriff sind.

Weitere Vorteile ergeben sich, wenn die Führungszahnriemen jeweils in mehrere voneinander beabstandete Abschnitte unterteilt sind, um eine exakte Verzahnung mit den gespannten, unter den Laufrollen hindurchgeführten Antriebszahnriemen oder -ketten zu ermöglichen. Die Antriebszahnriemen oder - ketten sind stets gespannt. Das führt dazu, dass auch bei Verwendung exakt gleicher Zahnriemen für die Führungs- und Antriebszahnriemen keine exakte gegenseitige Verzahnung der Riemen über größere Abschnitte möglich ist, wenn man die Führungszahnriemen nicht auch spannen will. Werden die Führungszahnriemen jedoch in mehrere Teilabschnitte, die voneinander beabstandet auf die Schiene aufgebracht werden, unterteilt, so ist ein Ausgleich zu der geringfügigen Längung der oberen, gespannten Antriebsriemen oder -ketten möglich.

Die Führungszahnriemen können in unterschiedlicher Weise an den Schienen befestigt sein. Vorzugsweise können sie jedoch mit diesen verklebt sein.

Die erfindungsgemäße Antriebsvorrichtung eignet sich nicht nur für Portale von Werkzeugmaschinen, sondern auch für andere Einrichtungen wie beispielsweise verfahrbare Lastkräne oder dergleichen.

## Patentansprüche

1. Omega-Antriebsvorrichtung für auf Laufrollen linear bewegbare Einrichtungen, insbesondere für ein längs eines Tisches zur Werkstückaufnahme verfahrbares Werkzeugportal einer Werkzeugmaschine, mit Zahnriemen oder Ketten, wobei die Zahnriemen oder Ketten von einer an der Einrichtung angeordneten Welle angetrieben und zwischen seitlichen Laufscheiben an den Laufrollen und unter diesen hindurchgeführt sind, **dadurch gekennzeichnet, dass** die Laufrollen auf Schienen geführt sind, die mit Führungszahnriemen belegt sind, deren Verzahnung in die Verzahnung der Antriebszahnriemen oder -ketten der Einrichtung eingreifen.

2. Antriebsvorrichtung nach Anspruch 1, **dadurch gekennzeichnet, dass** die Führungszahnriemen jeweils in mehrere voneinander beabstandete Abschnitte unterteilt sind, um eine exakte Verzahnung mit den gespannten, unter den Laufrollen hindurchgeführten Antriebszahnriemen oder - ketten zu ermöglichen.

3. Antriebsvorrichtung nach Anspruch 1 oder 2, **dadurch gekennzeichnet, dass** die Führungszahnriemen mit den Schienen verklebt sind.
